# EUROPÄISCHE PATENTSCHRIFT

(11) **EP 4 580 929 B1**
(45) Veröffentlichungstag und Bekanntmachung des Hinweises auf die Patenterteilung: **21.10.2026**
(21) Anmeldenummer: 23739239.4
(22) Anmeldetag: 05.07.2023
(51) Int. Cl.: B62D 1/08

(54) **LENKRAD**
STEERING WHEEL
VOLANT DE DIRECTION

(30) Priorität: 30.08.2022 DE 102022003162
(43) Veröffentlichungstag der Anmeldung: 09.07.2025
(73) Patentinhaber: Mercedes-Benz Group AG, 70372 Stuttgart (DE)
(72) Erfinder: LA PLACA, Giovanni, 71636 Ludwigsburg (DE)
(74) Vertreter: Novagraaf Group
(86) Internationale Anmeldenummer: PCT/EP2023/068611
(87) Internationale Veröffentlichungsnummer: WO 2024/046626

(56) Entgegenhaltungen:
- DE-A1- 102016 115 466
- DE-A1- 102021 005 210

## Beschreibung

Die Erfindung betrifft ein Lenkrad gemäß dem Oberbegriff des Patentanspruchs 1.

Lenkräder werden bekanntermaßen zur Vorgabe beziehungsweise zur Anwahl der Lenkbewegung eines Fahrzeugs eingesetzt.

Bei derartigen Lenkrädern ist üblicherweise eine als Lenkradkranz ausgebildete Lenkungshandhabe mittels Lenkradspeichen mit einem mittig im Lenkrad angeordneten Pralltopf verbunden.

Aus der gattungsbildenden Druckschrift DE 10 2016 115 466 A1, von der die vorliegende Erfindung ausgeht, ist zu dieser Thematik ein Steuerhorn für die Lenkung eines Kraftfahrzeugs bekannt, das zwei seitlich in entgegengesetzte Richtungen abstehende Lenkgriffe aufweist. Durch eine motorisch angetriebene Verstellvorrichtung können die Lenkgriffe zwischen einer Gebrauchsstellung mit größerem Abstand der Lenkgriffe zueinander und einer Bereitschaftsstellung mit geringerem Abstand der Lenkgriffe zueinander verschoben werden. Zudem können die beiden Lenkgriffe in der Gebrauchsstellung zum Fahrer des Kraftfahrzeugs hin gedreht werden und in der Bereitschaftsstellung vom Fahrer weg gedreht werden.

Die DE 10 2021 005 210 A1 offenbart eine Lenkanordnung für ein Fahrzeug, umfassend ein drehbares Lenkrad, welches mit Mitteln zur Verlagerung des Lenkrades verbunden ist. Bei einer Lenkanordnung, die eine optimale Lenk-Ergonomie für den Fahrer ermöglicht, ist das drehbare Lenkrad über mehrere als längsverstellbare Streben ausgebildete Mittel zur Verlagerung des Lenkrades gelenkig an einer bugseitig hinter dem Lenkrad angeordneten Fahrzeugkomponente befestigt.

Aus der DE 10 2016 002 204 A ist eine Betätigungsvorrichtung zur manuellen Betätigung einer Fahrzeugfunktion mit einem Handgriffelement bekannt, wobei das Handgriffelement über ein stabförmiges Element mit einer Drehachse verbunden ist und in Abhängigkeit des durch eine Schwenkbewegung des Handgriffelements erzeugten Drehwinkels der Drehachse die Fahrzeugfunktion ausgeführt wird. Erfindungsgemäß ist vorgesehen, dass zur Einstellung des Abstandes zwischen dem Handgriffelement und der Drehachse das stabförmige Element mittels einer Längenverstelleinrichtung kontinuierlich oder stufig verlängerbar und/oder verkürzbar ist.

Der Erfindung liegt ausgehend von diesem bekannten Stand der Technik die Aufgabe zugrunde, ein gattungsgemäßes Lenkrad anzugeben, bei dem das Lenkrad und insbesondere die Lenkungshandhabe des Lenkrads auf einfache Weise beliebig positionierbar ist.

Diese Aufgabe wird gemäß der Erfindung durch ein Lenkrad mit den Merkmalen des Patentanspruchs 1 gelöst.

Vorteilhafte Weiterbildungen der Erfindung sind Bestandteil der weiteren Patentansprüche.

Beim erfindungsgemäßen Lenkrad mit zwei Handgriffen als Lenkungshandhabe sind (mindestens) drei teleskopierbare Verstellelemente zur Verbindung eines jeweiligen Handgriffs mit dem Pralltopf des Lenkrads vorgesehen, um den jeweiligen Handgriff definiert in alle Raumrichtungen positionieren beziehungsweise verstellen zu können. D.h. die beiden als Lenkungshandhabe vorgesehenen Handgriffe können entweder gemeinsam oder unabhängig voneinander in allen drei Raumdimensionen durch radiale Verschiebung, vertikale Verschiebung, Drehbewegung, Kippbewegung oder durch eine Kombination dieser Bewegungsarten oder gegebenenfalls auch durch weitere Bewegungsarten beliebig verstellt werden.

Um eine einfache und vollständige Verstellmöglichkeit eines Handgriffs zu gewährleisten, sind die mindestens drei teleskopierbaren Verstellelemente auf einer Seite des Lenkrads in mindestens zwei versetzt zueinander liegenden Ebenen angeordnet. Falls drei teleskopierbare Verstellelemente auf einer Seite des Lenkrads mit einem jeweiligen Handgriff verbunden sind, können das obere teleskopierbare Verstellelement und das untere teleskopierbare Verstellelement in der gleichen Ebene angeordnet sein, während das mittlere teleskopierbare Verstellelement in einer Ebene versetzt hierzu angeordnet sein kann.

Falls mehr als drei teleskopierbaren Verstellelemente auf einer Seite des Lenkrads angeordnet sind, könnte sich dies gegebenenfalls positiv auf die Stabilität der gesamten Anordnung des Lenkrads auswirken.

Die teleskopierbaren Verstellelemente sind jeweils über ein 3D-Lager, beispielsweise über ein Kugellager oder ein flexibles Gummielement sowohl mit einem Handgriff als auch mit dem Pralltopf des Lenkrads verbunden. D.h. das 3D-Lager ist an beiden Enden eines teleskopierbaren Verstellelements angeordnet und ermöglicht hierdurch eine einfache Bewegung des Handgriffs in allen Dimensionen.

Zur Längenverstellung eines teleskopierbaren Verstellelements, d.h. zum Einfahren und Ausfahren eines teleskopierbaren Verstellelements aus einem Gehäuse, kann im jeweiligen teleskopierbaren Verstellelement eine elektromotorische Antriebsvorrichtung integriert sein, mit der ein elektromotorisches Einfahren und Ausfahren eines teleskopierbaren Verstellelements realisiert werden kann.

Alternativ kann zur Längenverstellung eines teleskopierbaren Verstellelements, d.h. zum Einfahren und Ausfahren eines teleskopierbaren Verstellelements aus einem Gehäuse, auch im jeweiligen teleskopierbaren Verstellelement eine pneumatische Antriebsvorrichtung oder eine hydraulische Antriebsvorrichtung integriert sein, mit der ein pneumatisches Einfahren und Ausfahren eines teleskopierbaren Verstellelements oder ein hydraulisches Einfahren und Ausfahren eines teleskopierbaren Verstellelements realisiert werden kann.

In einer vorteilhaften Weiterbildung der Erfindung ist zur Längenverstellung der teleskopierbaren Verstellelemente ein im jeweiligen Verstellelement integrierter Schneckenantrieb vorgesehen, mittels dem eine präzise und zuverlässige Längenverstellung der teleskopierbaren Verstellelemente realisiert werden kann.

Damit die zwischen einem jeweiligen Handgriff und dem Pralltopf des Lenkrads vorgesehenen teleskopierbaren Verstellelemente nicht sichtbar sind und damit den ästhetischen Eindruck im Interieur des Kraftfahrzeugs gegebenenfalls nicht stören, können diese teleskopierbaren Verstellelemente insbesondere auf ihrem gesamten möglichen Verstellweg abgedeckt werden.

Diese Abdeckung für die teleskopierbaren Verstellelemente kann vorzugsweise als flexibler Faltenbalg oder als ineinandergreifendes gestaffeltes Abdeckelement oder als in sich verschiebbares Abdeckelement ausgebildet sein.

Das Lenksignal, d.h. die eigentliche Drehbewegung der Lenkhandhabe des Lenkrads beziehungsweise der Handgriffe des Lenkrads durch den Fahrer des Kraftfahrzeugs, wird dabei durch die teleskopierbaren Verstellelemente an die Lenksäule übertragen. Vorzugsweise kann hierdurch auch eine (dynamische) Verstellung der Lenkungshandhabe des Lenkrads, d.h. der beiden Handgriffe des Lenkrads, während einer Lenkbetätigung des Lenkrads vorgenommen werden. Beispielsweise kann der jeweils obenliegende Handgriff etwas nach vorn (in Fahrzeuglängsrichtung gesehen) verstellt werden, und hierdurch ein dynamisches und sportliches Lenkgefühl vermittelt werden.

Insgesamt lassen sich durch die erfindungsgemäße Ausgestaltung des Lenkrads eine große Anzahl unterschiedlicher Verstellmöglichkeiten bzw. Einstellmöglichkeiten der beiden Handgriffe des Lenkrads realisieren.

Um beispielsweise einen verbesserten Einstieg in das Kraftfahrzeug beziehungsweise einen verbesserten Ausstieg aus dem Kraftfahrzeug für einen Insassen des Kraftfahrzeugs und insbesondere für den Fahrer des Kraftfahrzeugs zu ermöglichen, können die beiden Handgriffe zu diesem Zwecke axial und/oder in vertikaler Richtung verstellt werden. Diese Verstellung der Handgriffe kann beispielsweise auch mit einer Speichereinheit für die Sitzverstellung des Kraftfahrzeugs (einem sogenannten "Sitzmemory") gekoppelt sein, so dass die jeweilige Position der beiden Handgriffe bei den entsprechenden Gegebenheiten beziehungsweise bei bestimmten Betriebszuständen des Kraftfahrzeugs automatisch angefahren wird.

Um beispielsweise einen für den jeweiligen Fahrer individuellen und adäquaten Charakter des Lenkrads bereitzustellen, kann auch der Abstand der beiden Handgriffe zueinander und damit der "Radius" des Lenkrads beispielsweise anhand eines vorgegebenen und gespeicherten Fahrerprofils eingestellt werden. Somit kann beispielsweise ein sportiveres Lenkrad mit einem geringen Abstand der beiden Handgriffe zueinander auf einfache Weise realisiert werden.

Neben einer radialen Verstellung der beiden Handgriffe, d.h. des Abstands der beiden Handgriffe zueinander oder einer Höhenverstellung der beiden Handgriffe, d.h. der Verstellung der beiden Handgriffe in vertikaler Richtung als Einstiegshilfe, kann insbesondere auch eine Kippbewegung der beiden Handgriffe realisiert werden, wodurch beispielsweise bei (teil-)autonom gefahrenen Streckenabschnitten des Kraftfahrzeugs eine vorteilhafte, für den Fahrer des Kraftfahrzeugs bequeme und/oder ergonomisch günstige Position des Lenkrads eingestellt werden kann.

Vorteilhafterweise kann aber auch eine beliebige andere Positionierung beziehungsweise Verstellung der beiden Handgriffe des Lenkrads vorgegeben beziehungsweise eingestellt werden, insbesondere auch eine Kombination der hier vorgestellten Verstellvarianten der beiden Handgriffe.

Somit lässt sich eine für die jeweilige Fahrsituation des Kraftfahrzeugs und/oder für den jeweiligen Fahrer des Kraftfahrzeugs individuell eine adäquate und vorteilhafte Positionierung der beiden Handgriffe und damit des Lenkrads insgesamt realisieren.

Weitere Vorteile, Merkmale und Einzelheiten der Erfindung ergeben sich aus der nachfolgenden Beschreibung eines bevorzugten Ausführungsbeispiels sowie anhand der Zeichnung.

Dabei zeigen:
- Fig. 1: Eine schematische Darstellung eines teleskopierbaren Verstellelements des Lenkrads.
- Fig. 2: Eine schematische Darstellung der Vorderansicht eines Lenkrads mit teleskopierbaren Verstellelementen.
- Fig. 3: Eine schematische Darstellung der Draufsicht eines Lenkrads mit teleskopierbaren Verstellelementen.
- Fig. 4: Eine schematische Darstellung der Seitenansicht eines Lenkrads mit teleskopierbaren Verstellelementen.
- Fig. 5: Eine Darstellung einer ersten Verstellmöglichkeit der beiden Handgriffe des Lenkrads.
- Fig. 6: Eine Darstellung einer zweiten Verstellmöglichkeit der beiden Handgriffe des Lenkrads.
- Fig. 7: Eine Darstellung einer dritten Verstellmöglichkeit der beiden Handgriffe des Lenkrads.
- Fig. 8: Eine Darstellung einer vierten Verstellmöglichkeit der beiden Handgriffe des Lenkrads.

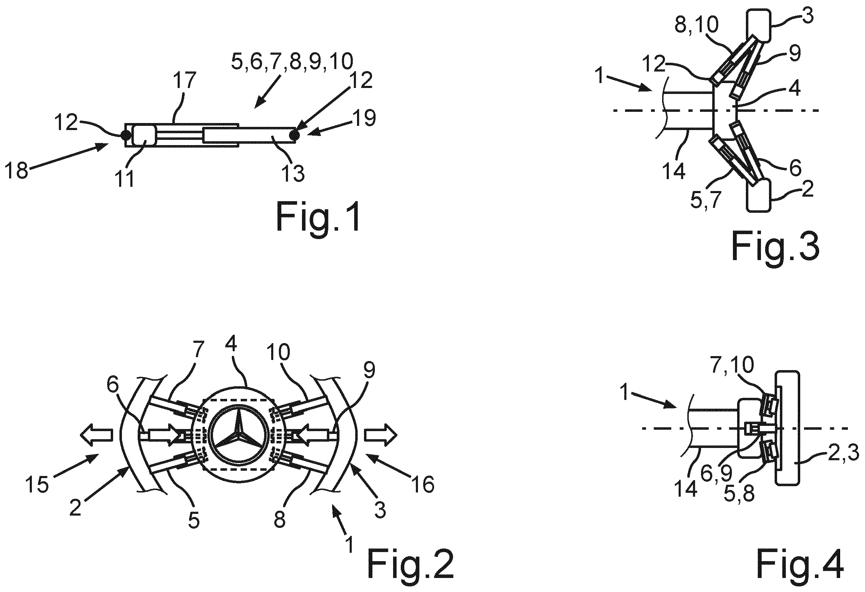

Die Figur 1 zeigt eine Prinzipdarstellung eines der beim erfindungsgemäßen Lenkrad 1 vorgesehenen teleskopierbaren Verstellelemente 5, 6, 7; 8, 9, 10.

Jedes dieser teleskopierbaren Verstellelemente 5, 6, 7; 8, 9, 10 besitzt eine beispielsweise als Elektromotor mit Schneckenantrieb ausgebildete Antriebsvorrichtung 11, mittels der der Ausleger 13 aus dem Gehäuse 17 des teleskopierbaren Verstellelements 5, 6, 7; 8, 9, 10 herausgefahren werden kann und in das Gehäuse 17 des teleskopierbaren Verstellelements 5, 6, 7; 8, 9, 10 hineingefahren werden kann.

An den beiden Enden 18, 19 eines teleskopierbaren Verstellelements 5, 6, 7; 8, 9, 10 ist ein beispielsweise als Kugellager ausgebildetes 3D-Lager 12 angeordnet, mittels dem eine einfache Verstellung der mit einem teleskopierbaren Verstellelement 5, 6, 7; 8, 9, 10 verbundenen bogenförmigen Handgriffe 2; 3 als Handhabe des Lenkrads 1 in allen gewünschten Dimensionen realisiert werden kann.

Gemäß der Vorderansicht in der Figur 2 weist das Lenkrad 1 auf den beiden Seiten 15; 16 jeweils einen bogenförmigen Handgriff 2; 3 als Handhabe des Lenkrads 1 auf.

Jeder dieser beiden Handgriffe 2; 3 ist über beispielsweise drei teleskopierbare Verstellelemente 5, 6, 7; 8, 9, 10 mit dem Pralltopf 4 des Lenkrads 1 verbunden. D.h. auf der einen Seite 15 des Lenkrads 1 ist der Handgriff 2 über die drei teleskopierbaren Verstellelemente 5, 6, 7 mit dem Pralltopf 4 des Lenkrads 1 verbunden, auf der anderen Seite 16 des Lenkrads 1 ist der Handgriff 3 über die drei teleskopierbaren Verstellelemente 8, 9, 10 mit dem Pralltopf 4 des Lenkrads 1 verbunden.

Die beiden äußeren teleskopierbaren Verstellelemente 5, 7 auf der einen Seite 15 des Lenkrads 1 beziehungsweise die beiden äußeren teleskopierbaren Verstellelemente 8, 10 auf der anderen Seite 16 des Lenkrads 1 sind in der gleichen Ebene angeordnet, das mittlere teleskopierbare Verstellelement 6 auf der einen Seite 15 des Lenkrads 1 beziehungsweise das mittlere teleskopierbare Verstellelement 9 auf der anderen Seite 16 des Lenkrads 1 ist jeweils in einer hierzu versetzten Ebene angeordnet.

Die teleskopierbaren Verstellelemente 5, 6, 7; 8, 9, 10 sind jeweils über die beispielsweise als Kugellager ausgebildeten 3D-Lager 12 an dem einen Ende 18 mit dem zugehörigen Handgriff 2; 3 und an dem andern Ende 19 mit dem Pralltopf 4 des Lenkrads 1 verbunden.

In der Draufsicht auf das Lenkrad 1 gemäß der Figur 3 und in der Seitenansicht des Lenkrads 1 gemäß der Figur 4 ist zu erkennen, dass die drei teleskopierbaren Verstellelemente 5, 6, 7; 8, 9, 10 auf jeweils einer Seite 15; 16 des Lenkrads 1 in zwei zueinander versetzten Ebenen angeordnet sind.

Insbesondere ist der Figur 3 und der Figur 4 zu entnehmen, dass die beiden teleskopierbaren Verstellelemente 5, 7 beziehungsweise 8, 10 in einer Ebene angeordnet sind, während das teleskopierbare Verstellelement 6 beziehungsweise das teleskopierbare Verstellelement 9 in einer hierzu versetzten Ebene angeordnet ist.

Der Pralltopf 4 des Lenkrads 1 ist mit der drehbaren Lenksäule 14 verbunden, über die die Drehbewegung des Lenkrads 1 beziehungsweise der beiden Handgriffe 2; 3 des Lenkrads 1 als Lenkungshandhabe an die Lenkung des Kraftfahrzeugs übertragen wird.

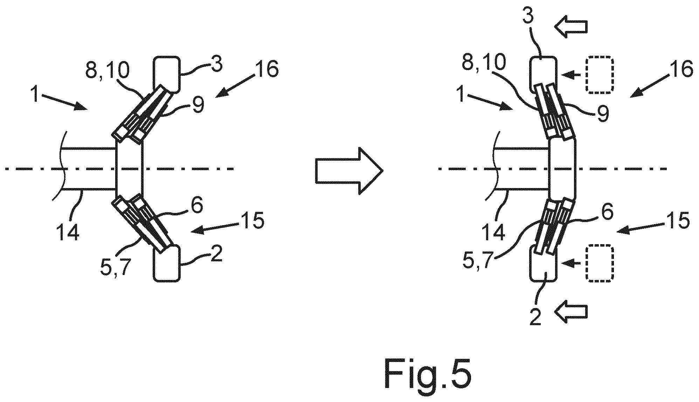

In der Figur 5 ist eine Verstellmöglichkeit der beiden Handgriffe 2; 3 des Lenkrads 1 zur Realisierung eines komfortablen Einstiegs eines Fahrers in das Kraftfahrzeug in einer Draufsicht auf das Lenkrad 1 dargestellt.

Hierzu werden alle teleskopierbaren Verstellelemente 5, 6, 7; 8, 9, 10 von der links dargestellten Ausgangsposition beziehungsweise aus der Ausgangsstellung (linke Darstellung in Figur 5) in Richtung der Lenksäule 14 des Lenkrads 1 geklappt und hierdurch auch die beiden Handgriffe 2; 3 des Lenkrads 1 in diese Richtung bis zur rechts dargestellten Endposition geschwenkt (rechte Darstellung in Figur 5). Hierdurch wird vor dem Lenkrad 1 ein größerer Freiraum für den Fahrer des Kraftfahrzeugs geschaffen, der vom Fahrer des Kraftfahrzeugs vorzugsweise beim Einstieg in das Kraftfahrzeug genutzt werden kann.

Diese Verstellung der teleskopierbaren Verstellelemente 5, 6, 7; 8, 9, 10 und damit auch der beiden Handgriffe 2; 3 des Lenkrads 1 kann beispielsweise bei einer Betätigung der Fahrertüre des Kraftfahrzeugs und/oder einer Betätigung eines für die Zugangsberechtigung zum Kraftfahrzeug erforderlichen elektronischen Schlüssels automatisiert vorgenommen werden, beispielsweise auch mittels einer personalisierten Zuordnung zu einem elektronischen Schlüssel. D.h. die gewünschte Position der beiden Handgriffe 2; 3 des Lenkrads 1 wird dann beim Öffnen des Kraftfahrzeugs automatisch angefahren beziehungsweise eingestellt. Die beschriebene Verstellung der teleskopierbaren Verstellelemente 5, 6, 7; 8, 9, 10 und damit auch der beiden Handgriffe 2; 3 des Lenkrads 1 kann in gleicher Weise auch beim Ausstieg des Fahrer des Kraftfahrzeugs aus dem Kraftfahrzeug vorgenommen werden.

Beispielsweise kann die Verstellung der teleskopierbaren Verstellelemente 5, 6, 7; 8, 9, 10 und damit auch der beiden Handgriffe 2; 3 des Lenkrads 1 an eine Verstellung des Fahrersitzes beim Einstieg in das Kraftfahrzeug beziehungsweise beim Ausstieg aus dem Kraftfahrzeug im Rahmen einer automatisierten und gegebenenfalls personalisierten Verstellung der Sitze (und damit an ein sogenanntes Sitzmemory) gekoppelt werden. Zusätzlich zur Verstellung der teleskopierbaren Verstellelemente 5, 6, 7; 8, 9, 10 in Richtung der Lenksäule 14 können diese teleskopierbaren Verstellelemente 5, 6, 7; 8, 9, 10 gleichzeitig auch in vertikaler Richtung nach oben verstellt werden, wodurch auch die beiden Handgriffe 2; 3 des Lenkrads 1 zusätzlich in diese Richtung bewegt werden. Hierdurch wird, falls erforderlich, vor dem Lenkrad 1 ein nochmals größerer Freiraum für den Fahrer des Kraftfahrzeugs geschaffen.

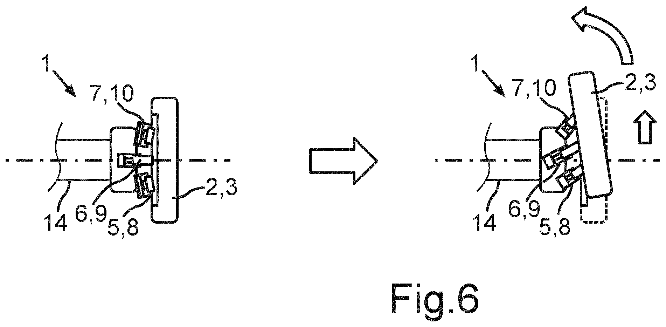

In der Figur 6 ist eine weitere Verstellmöglichkeit der beiden Handgriffe 2; 3 des Lenkrads 1 in einer Seitenansicht des Lenkrads 1 dargestellt, die beispielsweise zur komfortablen Handhabe des Lenkrads 1 und insbesondere für einen Fahrer das Kraftfahrzeugs mit langen Armen vorteilhaft ist.

Hierzu werden die teleskopierbaren Verstellelemente 5, 6, 7; 8, 9, 10 von der in Figur 6 links dargestellten Ausgangsposition in vertikaler Richtung nach oben verstellt, wodurch auch die beiden Handgriffe 2; 3 des Lenkrads 1 in diese Richtung bis zur in Figur 6 rechts dargestellten Endposition bewegt.

Zusätzlich zur dieser vertikalen Verstellung der teleskopierbaren Verstellelemente 5, 6, 7; 8, 9, 10 und damit der beiden Handgriffe 2; 3 des Lenkrads 1 können die beiden Handgriffe 2; 3 des Lenkrads 1 auch nach vorne in Richtung der Lenksäule 14 des Lenkrads1 gekippt werden. Hierdurch wird ein größerer Abstand vom Fahrersitz des Kraftfahrzeugs zum Lenkrad 1 hin geschaffen, was oftmals für eine komfortable Bedienung des Lenkrads erforderlich beziehungsweise erwünscht ist.

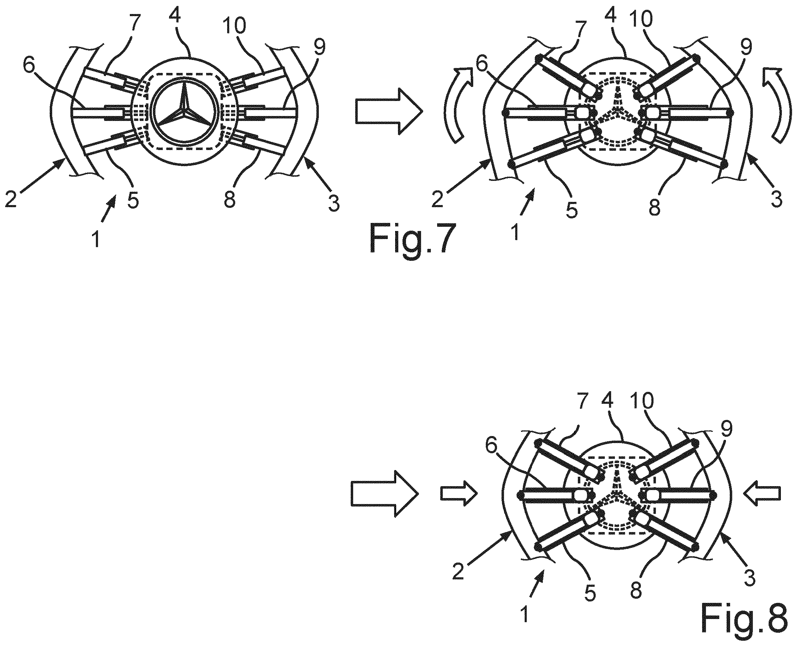

In der Figur 7 ist eine weitere Verstellmöglichkeit der beiden Handgriffe 2; 3 des Lenkrads 1 in einer Vorderansicht des Lenkrads 1 dargestellt.

Hierzu werden die teleskopierbaren Verstellelemente 5, 6, 7; 8, 9, 10 von der in Figur 7 links dargestellten Ausgangsposition derart verstellt, dass die beiden Handgriffe 2; 3 des Lenkrads 1 in der in Figur 7 rechts dargestellten Endposition eine verdrehte Stellung zueinander annehmen. Insbesondere wird dies dadurch realisiert, dass die jeweils untersten teleskopierbaren Verstellelemente 5, 8 weiter ausgefahren werden als die jeweils mittleren teleskopierbaren Verstellelemente 6, 9, während die jeweils obersten teleskopierbaren Verstellelemente 7, 10 nicht ausgefahren werden.

Diese Verstellung der beiden Handgriffe 2; 3 des Lenkrads 1 kann beispielsweise erforderlich sein beziehungsweise erwünscht sein, um zum einen eine vorteilhafte ergonomische Anordnung der beiden Handgriffe 2, 3 zu realisieren und um zum anderen im unteren Bereich des Lenkrads 1 beziehungsweise der Lenkungshandhabe aufgrund des dortigen größeren Abstandes der beiden Handgriffe 2, 3 ein höheres Lenkmoment erzielen zu können, ohne dass dabei die Sicht des Fahrers auf umliegende, beispielsweise am Lenkstock oder am Armaturenbrett angeordnete Bedienelemente eingeschränkt wird.

In der Figur 8 ist schließlich noch eine weitere Verstellmöglichkeit der beiden Handgriffe 2; 3 des Lenkrads 1 in einer Vorderansicht des Lenkrads 1 dargestellt.

Hierzu werden die teleskopierbaren Verstellelemente 5, 6, 7; 8, 9, 10 von der in Figur 8 links dargestellten Ausgangsposition derart verstellt, dass die beiden Handgriffe 2; 3 des Lenkrads 1 in der in Figur 8 rechts dargestellten Endposition einen verkleinerten Abstand zueinander annehmen.

Dies kann beispielsweise zur Realisierung eines "sportlichen" Charakters der Lenkung des Kraftfahrzeugs und damit eines sportlichen beziehungsweise sportiven Erscheinungsbilds des Lenkrads 1 des Kraftfahrzeugs erwünscht sein.

## Patentansprüche

1. Lenkrad (1), bei dem eine Lenkungshandhabe mit einem mittig im Lenkrad (1) angeordneten Pralltopf (4) verbunden ist, wobei die Lenkungshandhabe aus zwei auf entgegengesetzten Seiten (15; 16) des Lenkrads (1) angeordneten Handgriffen (2; 3) gebildet ist,
**dadurch gekennzeichnet,**
**dass** zur dreidimensionalen Verstellung der Lenkungshandhabe ein Handgriff (2; 3) jeweils über mindestens drei teleskopierbare Verstellelemente (5, 6, 7; 8, 9, 10) mit dem Pralltopf (4) verbunden ist.

2. Lenkrad (1) nach Anspruch 1,
**dadurch gekennzeichnet, dass**
die mindestens drei teleskopierbaren Verstellelemente (5, 6, 7; 8, 9, 10) auf einer Seite (15; 16) des Lenkrads (1) in zwei versetzt zueinander liegenden Ebenen angeordnet sind.

3. Lenkrad (1) nach Anspruch 1 oder 2,
**dadurch gekennzeichnet, dass**
die teleskopierbaren Verstellelemente (5, 6, 7; 8, 9, 10) jeweils über ein 3D-Lager (12) mit einem Handgriff (2; 3) und mit dem Pralltopf (4) verbunden sind.

4. Lenkrad (1) nach einem der Ansprüche 1 bis 3,
**dadurch gekennzeichnet, dass**
zur Längenverstellung der teleskopierbaren Verstellelemente (5, 6, 7; 8, 9, 10) eine elektromotorische Antriebsvorrichtung (11) vorgesehen ist.

5. Lenkrad (1) nach einem der Ansprüche 1 bis 3,
**dadurch gekennzeichnet, dass**
zur Längenverstellung der teleskopierbaren Verstellelemente (5, 6, 7; 8, 9, 10) eine pneumatische oder hydraulische Antriebsvorrichtung vorgesehen ist.

6. Lenkrad (1) nach einem der Ansprüche 1 bis 4,
**dadurch gekennzeichnet, dass**
zur Längenverstellung der teleskopierbaren Verstellelemente (5, 6, 7; 8, 9, 10) ein im jeweiligen teleskopierbaren Verstellelement (5, 6, 7; 8, 9, 10) integrierter Schneckenantrieb vorgesehen ist.

7. Lenkrad (1) nach einem der Ansprüche 1 bis 6,
**dadurch gekennzeichnet, dass**
die teleskopierbaren Verstellelemente (5, 6, 7; 8, 9, 10) mit einer Abdeckung versehen sind.

8. Lenkrad (1) nach Anspruch 7,
**dadurch gekennzeichnet, dass**
die Abdeckung für die teleskopierbaren Verstellelemente (5, 6, 7; 8, 9, 10) als flexibler Faltenbalg oder als ineinandergreifendes Abdeckelement oder als in sich verschiebbares Abdeckelement ausgebildet ist.

9. Lenkrad (1) nach einem der Ansprüche 1 bis 8,
**dadurch gekennzeichnet, dass**
die teleskopierbaren Verstellelemente (5, 6, 7; 8, 9, 10) zur in Richtung der Lenkachse der Lenksäule (14) axialen Verstellung und/oder zur radialen Verstellung und/oder zur Höhenverstellung und/oder zur Winkelverstellung der beiden Handgriffe (2; 3) vorgesehen sind.

10. Lenkrad (1) nach einem der Ansprüche 1 bis 9,
**dadurch gekennzeichnet, dass**
die teleskopierbaren Verstellelemente (5, 6, 7; 8, 9, 10) zur Verstellung der beiden Handgriffe (2; 3) während einer Lenkbetätigung des Lenkrads (1) vorgesehen sind.

## Claims

1. Steering wheel (1), wherein a steering handle is connected to an impact absorber (4) arranged centrally in the steering wheel (1), the steering handle being formed from two hand grips (2; 3) arranged on opposite sides (15; 16) of the steering wheel (1),
**characterized in that**
for three-dimensional adjustment of the steering handle, a hand grip (2; 3) is connected to the impact absorber (4) in each case via at least three telescopic adjustment elements (5, 6, 7; 8, 9, 10).

2. Steering wheel (1) according to claim 1,
**characterized in that**
the at least three telescopic adjustment elements (5, 6, 7; 8, 9, 10) are arranged on one side (15; 16) of the steering wheel (1) in two planes offset relative to one another.

3. Steering wheel (1) according to claim 1 or 2,
**characterized in that**
the telescopic adjustment elements (5, 6, 7; 8, 9, 10) are connected to a hand grip (2; 3) and to the impact absorber (4) in each case via a 3D bearing (12).

4. Steering wheel (1) according to any of claims 1 to 3,
**characterized in that**
an electric-motor-operated drive device (11) is provided for length adjustment of the telescopic adjustment elements (5, 6, 7; 8, 9, 10).

5. Steering wheel (1) according to any of claims 1 to 3,
**characterized in that**
a pneumatic or hydraulic drive device is provided for length adjustment of the telescopic adjustment elements (5, 6, 7; 8, 9, 10).

6. Steering wheel (1) according to any of claims 1 to 4,
**characterized in that**
a worm drive integrated in the relevant telescopic adjustment element (5, 6, 7; 8, 9, 10) is provided for length adjustment of the telescopic adjustment elements (5, 6, 7; 8, 9, 10).

7. Steering wheel (1) according to any of claims 1 to 6,
**characterized in that**
the telescopic adjustment elements (5, 6, 7; 8, 9, 10) are provided with a cover.

8. Steering wheel (1) according to claim 7,
**characterized in that**
the cover for the telescopic adjustment elements (5, 6, 7; 8, 9, 10) is a flexible gaiter or an interlocking cover element or a cover element which can slide into itself.

9. Steering wheel (1) according to any of claims 1 to 8,
**characterized in that**
the telescopic adjustment elements (5, 6, 7; 8, 9, 10) are provided for axial adjustment in the direction of the steering axis of the steering column (14) and/or for radial adjustment and/or for height adjustment and/or for angle adjustment of the two hand grips (2; 3).

10. Steering wheel (1) according to any of claims 1 to 9,
**characterized in that**
the telescopic adjustment elements (5, 6, 7; 8, 9, 10) are provided for adjusting the two hand grips (2; 3) during steering operation of the steering wheel (1).

## Revendications

1. Volant de direction (1), sur lequel une manette de direction est reliée à un cache (4) agencé au centre du volant de direction (1), dans lequel la manette de direction est formée de deux poignées (2 ; 3) agencées sur des côtés (15 ; 16) opposés du volant de direction (1),
**caractérisé en ce**
**que**, pour le réglage tridimensionnel de la manette de direction, une poignée (2 ; 3) est reliée au cache (4) respectivement par l'intermédiaire d'au moins trois éléments de réglage (5, 6, 7 ; 8, 9, 10) télescopiques.

2. Volant de direction (1) selon la revendication 1,
**caractérisé en ce que**
les au moins trois éléments de réglage (5, 6, 7 ; 8, 9, 10) télescopiques sont agencés sur un côté (15 ; 16) du volant de direction (1) dans deux plans situés décalés l'un par rapport à l'autre.

3. Volant de direction (1) selon la revendication 1 ou 2,
**caractérisé en ce que**
les éléments de réglage (5, 6, 7 ; 8, 9, 10) télescopiques sont respectivement reliés, par l'intermédiaire d'un palier 3D (12), à une poignée (2 ; 3) et au cache (4).

4. Volant de direction (1) selon l'une des revendications 1 à 3,
**caractérisé en ce que**
un dispositif d'entraînement (11) à moteur électrique est prévu pour le réglage en longueur des éléments de réglage (5, 6, 7 ; 8, 9, 10) télescopiques.

5. Volant de direction (1) selon l'une des revendications 1 à 3,
**caractérisé en ce que**
un dispositif d'entraînement pneumatique ou hydraulique est prévu pour le réglage en longueur des éléments de réglage (5, 6, 7 ; 8, 9, 10) télescopiques.

6. Volant de direction (1) selon l'une des revendications 1 à 4,
**caractérisé en ce que**
un entraînement à vis sans fin intégré dans un élément de réglage (5, 6, 7 ; 8, 9, 10) télescopique respectif est prévu pour le réglage en longueur des éléments de réglage (5, 6, 7 ; 8, 9, 10) télescopiques.

7. Volant de direction (1) selon l'une des revendications 1 à 6,
**caractérisé en ce que**
les éléments de réglage (5, 6, 7 ; 8, 9, 10) télescopiques sont pourvus d'un élément de recouvrement.

8. Volant de direction (1) selon la revendication 7,
**caractérisé en ce que**
l'élément de recouvrement des éléments de réglage (5, 6, 7 ; 8, 9, 10) télescopiques est réalisé sous la forme d'un soufflet flexible, d'un élément de recouvrement s'emboîtant ou d'un élément de recouvrement coulissant.

9. Volant de direction (1) selon l'une des revendications 1 à 8,
**caractérisé en ce que**
les éléments de réglage (5, 6, 7 ; 8, 9, 10) télescopiques sont prévus pour le réglage axial dans la direction de l'essieu de direction de la colonne de direction (14) et/ou pour le réglage radial et/ou pour le réglage en hauteur et/ou pour le réglage angulaire des deux poignées (2 ; 3).

10. Volant de direction (1) selon l'une des revendications 1 à 9,
**caractérisé en ce que**
les éléments de réglage (5, 6, 7 ; 8, 9, 10) télescopiques sont prévus pour le réglage des deux poignées (2 ; 3) lors d'une commande de direction du volant de direction (1).
